Europäisches Patentamt

European Patent Office

Office européen des brevets

(11) Publication number: **0 213 897**
**B1**

# (12) EUROPEAN PATENT SPECIFICATION

(45) Date of publication of patent specification: **07.11.90**

(21) Application number: **86306497.8**

(22) Date of filing: **21.08.86**

(51) Int. Cl.⁵: **F 16 K 47/04, F 16 K 3/24, F 16 K 3/08**

(54) Rotary control valves with pressure-reducing means.

(30) Priority: **30.08.85 US 770967**

(43) Date of publication of application:
**11.03.87 Bulletin 87/11**

(45) Publication of the grant of the patent:
**07.11.90 Bulletin 90/45**

(84) Designated Contracting States:
**DE FR GB IT NL**

(56) References cited:
**BE-A- 897 500**
**DE-A-2 352 370**
**DE-B-1 138 290**
**DE-C- 719 919**
**FR-A-2 498 281**
**FR-A-2 551 836**
**FR-E- 60 803**
**US-A-3 325 141**
**US-A-3 424 200**
**US-A-4 098 294**
**US-A-4 212 321**

(73) Proprietor: **DANIEL INDUSTRIES, INC.,**
**9720 Katy Road**
**Houston Texas 77224 (US)**

(72) Inventor: **Hulsey, Eldon E.**
**2425 Sage Rd, No. 77**
**Houston Texas (US)**

(74) Representative: **Newell, William Joseph et al**
**D. Young & Co., 10 Staple Inn**
**London WC1V 7RD (GB)**

Courier Press, Leamington Spa, England.

## Description

The present invention generally relates to rotary control valves and more particularly to such valves that include a pressure reducing medium.

It is well known that as the fluid flow is throttled through a valve's orifice, its velocity increases and reaches a maximum value at a downstream point at which minimum pressure occurs. But a large increase in the flow velocity is often accompanied by excessive noise, flashing, cavitation, erosion, vibration, and even flow instability.

A slight attempt to remedy the cavitation problem is described in U.S. Patent 3,424,200. It shows a single rotary disc valve having a tapered arcuate orifice that regulates flow according to the adjusted position of the disc. Some fluid is diverted through small holes around the edge of the tapered orifice.

In my prior U.S. Patent 4,212,321 is described a spherical valve element which rotates about an axis that is coaxial with the main axis of the valve's casing. Along a diameter of the valve element extends a perforated straight tube, which is surrounded by a coaxial perforated sleeve that acts as a pressure-reducer. From the open ends of this tube extend circumferentially and in opposite directions, a pair of elongated, tapered orifices which permit a flow-way to become established between the valve's inlet and outlet ports. Rotation of the valve element throttles the flow through the flow-way.

In other known valves utilizing a pressure-reducing medium, when the fluid barely starts to flow through the valve's orifice, the available pressure-reducing medium is at a minimum. Only full-bore flow is through the entire pressure-reducing medium. Consequently, destructive pressure drops, as well as excessive noise and flow turbulence can be expected at most throttling positions of the valve element.

DE-A-2352370 discloses a rotary control valve comprising: a casing having a center axis and enclosing a receptacle which defines a pair of axially-opposed ports; a cylindrical valve chamber rotatably mounted in said receptacle, said valve chamber enclosing a cavity between a pair of end plates and having a pair of opposed, off-center orifices which are movable into and out of partial and full registration with their respective associated ports, said orifices forming respective near-circular apertures; a valve stem for adjustably rotating said valve chamber for controlling the flow through said ports; and a pressure-reducing medium disposed in said cavity for dividing the fluid flow therethrough into a plurality of tortuous streams for any adjustable angular position of said valve chamber. However, this valve is unable to let the fluid flow with substantially no pressure drop, even when the valve is fully open. US-A-4098294 discloses a similar valve which suffers from the same problem, even though it does not include a pressure-reducing medium.

US-A-3325141 discloses a valve in which a single bore is formed in a solid cylindrical valve chamber. The bore may be brought into and out of alignment with the inlet and outlet ports. When the bore is aligned with the ports, it permits fluid flow with substantially no pressure drop. However, when the bore is not aligned, the pressure reduction that occurs is accompanied by noise, cavitation, vibration etc.

According to the present invention, a rotary control valve is characterized in that said opposed orifices are located in said end plates so as to be axially opposed to one another; an off-center tube extends between said apertures inside said cavity; at least one of said orifices forms an elongate, arcuate channel which tapers in width as it runs away from the aperture forming part of the orifice; said valve chamber allows full-bore fluid flow through only said tube, when said apertures are brought into full registration with said ports; and said at least one arcuate channel is shaped to provide a desired pressure reduction between said ports for each adjusted angular position of said valve chamber at which said at least one arcuate channel is in partial or full registration with its associated port. Because the tube bypasses the cavity, the valve of the present invention offers all of the advantages of the smooth flow pressure reduction of the cavity and its pressure-reducing medium without the disadvantage of not being able to have full bore flow with substantially no pressure loss. Also, because the open end of the bypass tube is adjacent to the arcuate channel which permits access to the cavity and the pressure-reducing medium, the pressure drop across the valve may be continuously increased from substantially zero.

Preferably, the valve chamber is mounted on said stem for rotation therewith. Preferably, the tube is disposed inside the cavity substantially parallel to the stem.

Conveniently, at least one of the orifice plates has a valve seat adapted to close off its associated port.

The pressure-reducing medium may include a plurality of stacked, axially-spaced, disc-shaped members having respective holes therethrough.

Specific embodiments of the invention will be described by way of example only in connection with the accompanying drawings, wherein:

FIG. 1 is an isometric view of one valve embodiment showing its throttling orifice barely open;

FIG. 2 is a section elevational view of the valve shown in FIG. 1 with the orifices semi open;

FIG. 3 is an exploded view of the unitary valve casing and stem assembly of FIG. 1;

FIG. 4 is an exploded view of the valve chamber of FIG. 1 showing plates having identical orifices;

FIG. 5 is a section elevational view of the valve chamber with internal pressure-reducing means consisting of three stages of axially-spaced, perforated discs;

FIG. 6 is an exploded view of a single pressure-reducing stage of FIG. 5; the stage has three perforated discs; and the perforations vary in size from disc to disc and are angularly displaced from each other.

FIG. 7 is a partial sectional elevation view of a single stage shown in FIG. 6;

FIG. 8 is a partial exploded sectional view of the three discs taken on line 8-8 of FIG. 7;

FIGS. 9-14 show different adjusted throttling positions of the downstream orifice disc shown in FIG. 2, ranging from fully-closed orifice (FIG. 9) to fully-open orifice (FIG. 14);

FIG. 15 is an exploded view of an alternate embodiment of the valve chamber, which is very similar to FIG. 4 but has distinct orifices; and

FIG. 16 is a partially exploded view of another valve embodiment having a split casing but retaining the same valve chamber as shown in FIG. 4.

To simplify the description, similar or symmetrical parts will sometimes be designated with the same reference characters followed either by a prime (') or by the letters a,b,c..., and such similar parts will be described at a minimum to avoid repetition, especially when their operating principle is substantially the same.

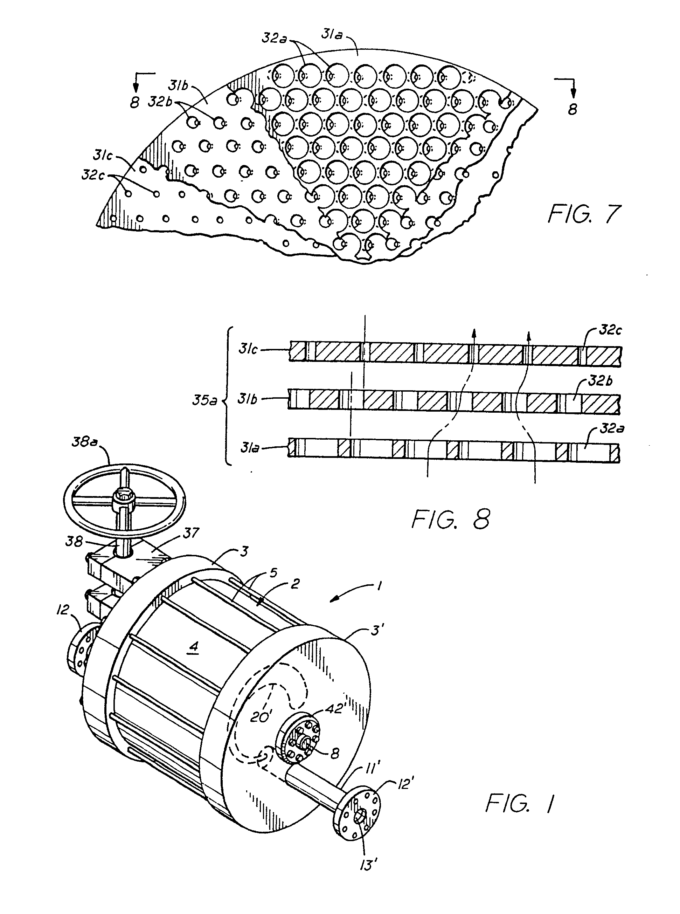

One embodiment of the rotary control valve of this invention, generally designated as 1 (FIGS.1-4), has a hollow unitary casing 2 comprising circular end plates 3, 3', separated by a cylindrical sleeve 4 and held together by bolts 5.

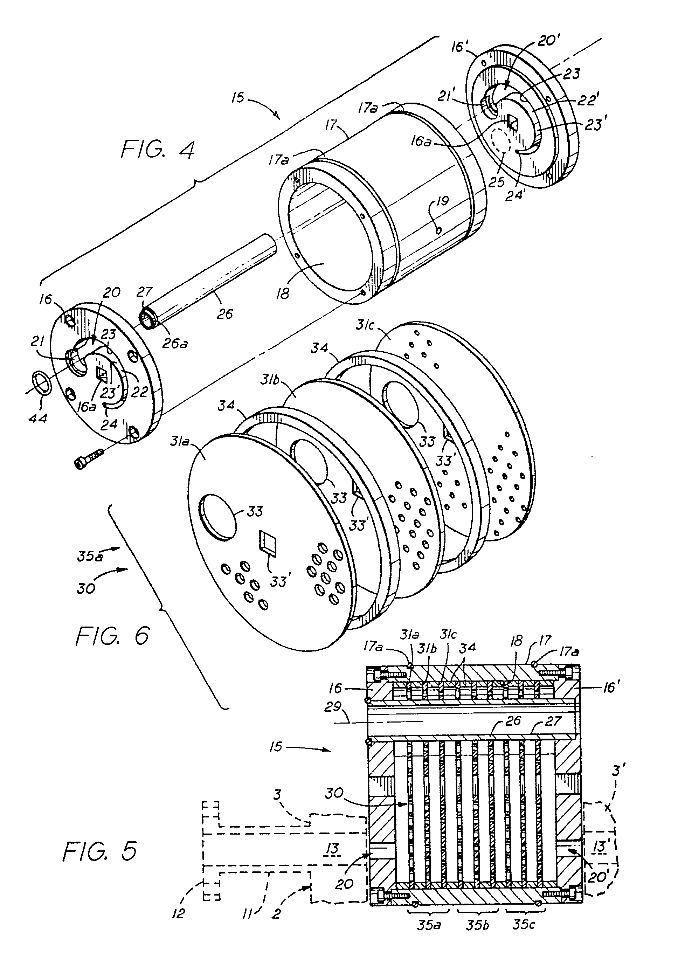

Casing 2 defines an inner receptacle 6 which is sealed by seals 4' and has a longitudinal main axis 7. A valve stem 8 extends through receptacle 6 and has an axis of rotation 9 coaxial with main axis 7. Stem 8 (FIGS. 3-4, 6) has a rectangular center portion 8' and round end portions 8''. Stem 8 is rotatably supported by axial thrust bearings 10, 10'. External conduits 11, 11' and end flanges 12, 12' can connect valve 1 to the flanges of a pipeline (not shown). End plates 3, 3' of casing 2 have concentric, circular ports 13, 13' having a common axis 14 parallel to main axis 7.

Inside receptacle 6 is disposed flow-control valve element which is a cylindrical chamber, generally designated as 15, mounted on stem 8 for rotation therewith. Valve chamber 15 comprises a cylinder 17 and a pair of axially-spaced, circular orifice plates 16, 16', which enclose a cavity 18. Cylinder 17 has a radial hole 19 between a pair of outer O-rings 17a.

Plates 16 and 16' define orifices 20, 20' which are contiguous to and move over ports 13, 13', respectively. Each one of orifices 20 and 20' can be suitably shaped or characterized to provide a desired flow and a particular pressure drop across its plate.

In the illustrated embodiment of FIG. 4, orifices 20 and 20' are identical and of equal angular length within a range preferably from about 180° to about 280°. Each orifice 20 is characterized by a nearly-circular orifice aperture 21, which is followed by an elongated, progressively-tapered orifice channel 22.

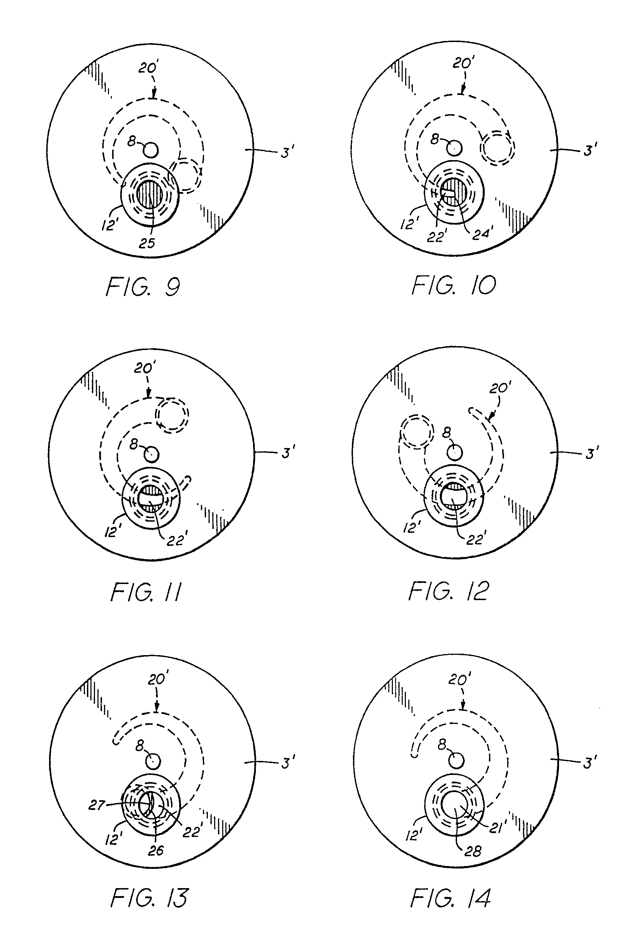

Apertures 21, 21' are coaxial and arcuate channels 22, 22' extend generally circumferentially, as best shown in FIGS. 9-14. Channel 22 is formed by a pair of inwardly-inclined, arcuate walls 23, 23', which converge to form a trailing end 24. The remaining solid portion of plate 16, between main aperture 21 and trailing end 24, forms a valve closure seat 25 (FIG. 9) which can close its opposite port 13 or 13', when valve chamber 15 is in its closed position.

A straight, non-perforated tube 26 (FIGS. 4, 14), having a cylindrical bore 27 of a diameter equal to ports 13, 13', is disposed inside cavity 18 and extends preferably between apertures 21, 21'. Tube 26 has an axis 29 which is sufficiently radially offset from the valve's main axis 7, so that fluid flowing through valve chamber 15 is substantially free from interference by tube 26.

The amount of pressure drop sustained by any fluid which may flow through cavity 18 is controlled by the use of a suitable pressure-reducing medium 30 (FIGS. 5-8), which divides the flow into streams having tortuous paths that cause the fluid to sustain an increasing pressure drop as it flows through chamber 15.

Medium 30 preferably includes a plurality of disc-shaped members 31a-31c, having axial holes 32a-32c, respectively, selected as to size, location and number, depending on the desired pressure drop. Holes 32a-32c of discs 31a-31c, respectively, can be angularly shifted from each other, and they can have progressively reduced or enlarged diameters on adjacently-facing discs. For example, holes 32a, 32c can be coaxial, and holes 32b can be angularly offset from both holes 32a, 32c.

Tube 26 extends through circular bores 33 in discs 31a-31c and rotates with them about rotation axis 9. Discs 31a-31c are spaced from each other by annular spacers 34. Sets of discs 31a-31c can be grouped into identical stages, such as stages 35a-35c, each having for example three discs 31a-31c. In FIGS. 7-8 holes 32a-32c are shown as being randomly offset from each other and become progressively reduced in the direction of flow indicated by the arrows.

A rotary driver mechanism 36 (FIGS. 1-3) is mounted on brackets 37 which are secured to plate 3. Mechanism 36 includes a drive shaft 38 which rotates on bearings 43 and has a bevel gear 39 which meshes with a driven gear 40 that is coupled to stem 8.

Discs 31a-31c (FIGS. 3-4, 6) and orifice plates 16, 16' have rectangular center holes 33' for accepting therethrough the rectangular stem portion 8'. Round end portions 8'' extend through seals 41, 41' and end caps 42, 42'.

A wheel 38a can rotate drive shaft 38, or shaft 38 can be rotated by an electric motor (not shown), preferably under computer control and in response to the output pressure monitored at downstream port 13'.

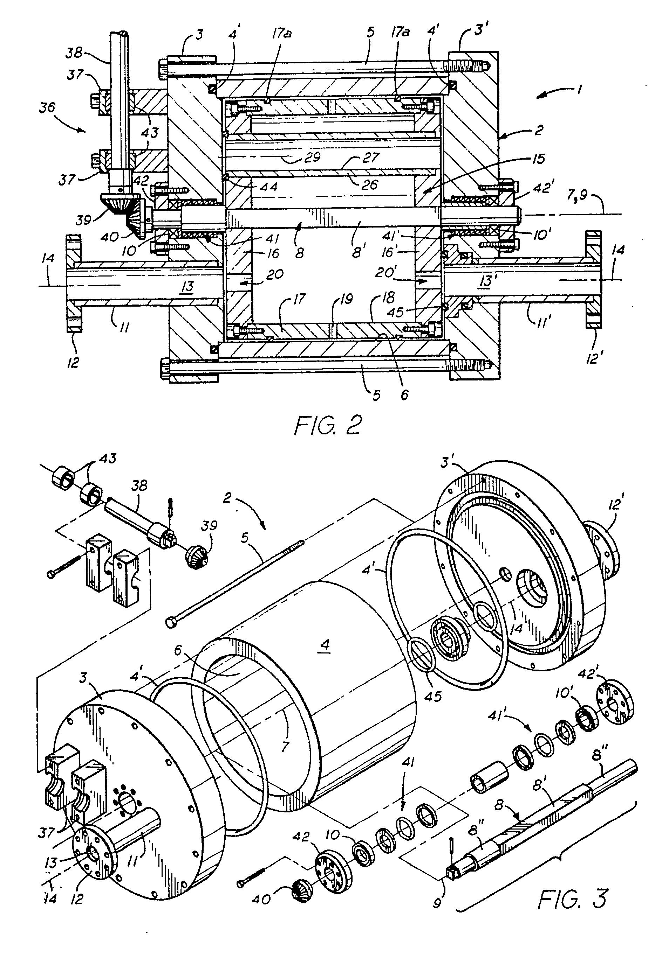

End 26a (FIG. 2) of tube 26 accepts a seal 44 for sealing off upstream port 13 when tube 26 is in full registration therewith. Port 13' is sealed off by seal 45.

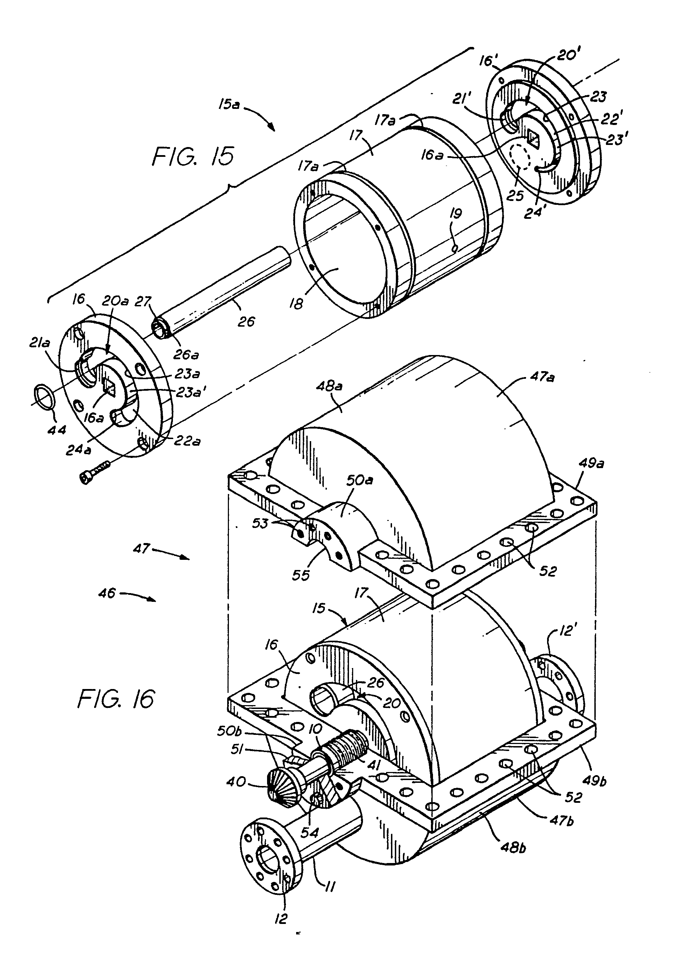

In FIG. 16 is shown a modified embodiment valve, generally designated as 46, which utilizes the valve chamber 15 of valve 1 shown in FIG. 4. Valve 46 has a split casing 47 comprised of two semi-cylindrical casings 47a, 47b, having semi-cylindrical receptacles 48a, 48b and outer flanges 49a, 49b, respectively. Receptacles 48a, 48b can be bolted together by bolts (not shown) extending through holes 52.

Seals 41, 41' and bearings 10, 10' are contained in two semi-cylindrical bracelets 50a, 50b, each defining a semi-cylindrical cavity 55. End caps 51 are secured by bolts 54 extending through threaded holes 53 in bracelets 50a, 50b.

It will be appreciated that valve chambers 15, having different orifices 20, 20' and/or discs 31a-31c, can be inserted into casing 47 to obtain different pressure drops from valve 46. This can be easily accomplished in the field with relatively simple tools.

In operation, as rotary driver 36 slowly rotates valve chamber 15 on stem 8 from its fully-closed position (FIG. 9) to its fully-open position (FIG. 14), successively wider portions of orifice channel 22 become exposed to and ride over port 13.

Fluid flow increases progressively into cavity 18 (FIG. 4) in an amount determined by the shape of channel 22. No fluid flows through bore 27 of tube 26. Any fluid entering cavity 18 will flow through the entire volume of pressure-reducing medium 30. Hence, the entire volume of medium 30 works for all throttling positions of orifices 20, 20'.

When orifice 20 approaches its fully-open position (FIG. 13), a portion of bore 27 of tube 26 and a portion of channel 22 become simultaneously exposed to port 13, and the flow becomes divided between channel 22 and bore 27. The portion of fluid flowing into bore 27 passes directly into port 13', while the portion flowing into channel 22 passes into cavity 18 from which it exits through the portion of channel 22' which is exposed to port 13'.

When orifice 20 reaches its fully-open position (FIG. 14), bore 27 of tube 26 is in full registration with ports 13, 13'. Tube 26 establishes a straight flowway 28 (FIG. 14) having an axis 29 (FIG. 2) which is coaxial with axis 14 of ports 13, 13'. Flow-way 28 allows full-bore flow with only a very negligible pressure drop, and medium 30 does not interfere with the full-bore flow-way 28.

The pressure drop across orifice 20 or 20' is determined by its shape and size. Orifices 20, 20' can be configured to derive from valve 1 a desired variable or constant output pressure. As the input pressure to port 13 changes, drive shaft 38 can be made to automatically rotate (using well-known feedback circuits) in a direction and by an angle so as to increase or decrease the portions of channels 22, 22' which are exposed to ports 13, 13', respectively, thereby restoring the output pressure from downstream port 13' to the preset or desired value.

Inside cavity 18, each perforated disc (FIG. 2) subdivides the flow through its holes into a plurality of small, separate flow streams which recombine downstream of the disc and outside of tube 26. In this manner, a predetermined amount of energy or pressure will be given up by the fluid as it flows across each disk.

Orifice 20 is sufficiently spaced from the first disc 31a to allow the entire volume of fluid to flow through all of its holes 32a. This process is repeated throughout the entire volume of pressure-reducing medium 30. The fluid flows out from the last disc 31c through the exposed portion of channel 22' which is exposed to port 13'.

Valve chamber 15 can easily accommodate interchangeable orifice plates 16 and 16' having different orifice shapes 20, 20'. Normally, the exposed width of channel 22 to port 13 changes gradually with rotation of valve chamber 15, thereby gradually throttling the fluid flow through orifice 20. But, in the modified embodiment of valve chamber 15a (FIG. 15), channel 22a is formed by concentric walls 23a, 23a' and has throughout its length a constant radial width equal to the diameter of main aperture 21a. Accordingly, full-bore fluid flows through the entire length of orifice 20a. In valve chamber 15a, the desired fluid flow control and pressure drop are primarily achieved by medium 30 and downstream orifice 20'.

In sum, the total pressure drop across valve chamber 15 or 15a is the sum of the individual pressure drops across (1) orifice plate 16, (2) medium 30, and (3) orifice plate 16'. To achieve a desired pressure reduction at the output of port 13', it is possible to adjust the individual pressure drops, which is another very important advantage of this invention.

As will be apparent to those skilled in this art, to obtain from known valves a controlled flow resolution that is comparable to that which can be derived from valve 1 of this invention would require using a conventional, dual-valve arrangement. Other advantages will also become apparent.

**Claims**

1. A rotary control valve (1, 46) comprising:
a casing (2, 47) having a center axis (7) and enclosing a receptacle (6, 48) which defines a pair of axially-opposed ports (13, 13');
a cylindrical valve chamber (15) rotatably mounted in said receptacle (6, 48), said valve chamber (15) enclosing a cavity (18) between a pair of end plates (16, 16') and having a pair of opposed, off-center orifices (20, 20') which are movable into and out of partial and full registration with their respective associated ports (13, 13'), said orifices (20, 20') forming respective near-circular apertures (21, 21');
a valve stem (8) for adjustably rotating said valve chamber (15) for controlling the flow through said ports (13, 13');
and a pressure-reducing medium (30) disposed in said cavity (18) for dividing the fluid flow therethrough into a plurality of tortuous streams for any adjustable angular position of said valve chamber (15);
characterized in that said opposed orifices (20, 20') are located in said end plates (16, 16') so as to be axially opposed to one another;

an off-center tube (26) extends between said apertures (21, 21') inside said cavity;

at least one of said orifices (20) forms an elongate, arcuate channel (22) which tapers in width as it runs away from the aperture (21, 21') forming part of the orifice (20);

said valve chamber (15) allows full-bore fluid flow through only said tube (26), when said apertures (21, 21') are brought into full registration with said ports (13, 13'); and

said at least one arcuate channel (22) is shaped to provide a desired pressure reduction between said ports (13, 13') for each adjusted angular position of said valve chamber (15) at which said at least one arcuate channel (22) is in partial or full registration with its associated port (13, 13').

2. A valve according to Claim 1, wherein said valve chamber (15) is mounted on said stem (8) for rotation therewith.

3. A valve according to Claim 1 or Claim 2, wherein said tube (26) is disposed substantially parallel to said stem (8).

4. A valve according to any one of Claims 1 to 3, wherein at least one of said orifice plates has a valve seat (25) adapted to close off its associated port.

5. A valve according to any one of Claims 1 to 4, wherein said pressure-reducing medium (30) includes a plurality of stacked, axially-spaced, disc-shaped members (31a-31c) having respective holes (32a-32c) therethrough.

6. A valve according to Claim 5, wherein each disc-shaped member includes a bore (33), and said tube (26) extends through all the bores (33) in said disc-shaped members (31a-31c).

7. A valve according to any one of Claims 1 to 6, wherein said casing (47) has two substantially semi-cylindrical casing parts (47a, 47b) adapted to embrace said valve chamber (15) and said shaft (8), thereby allowing insertion into and removal from said casing (47) of different valve chambers (15) by detaching said casing parts (47a, 47b).

8. A valve according to any one of Claims 1 to 7, wherein said valve chamber (15) has an angular throttling range between 180° and 280°.

9. A valve according to any one of Claims 1 to 8, wherein a drive shaft (38) is coupled to said stem (8) for rotating said chamber (15), thereby to control the output pressure from said valve.

**Patentansprüche**

1. Drehbares Regelventil (1, 46) mit

einem Gehäuse (2, 47), das eine Mittelachse (7) besitzt und einen Behälter (6, 48) umschließt, welcher ein Paar von axial gegenüberliegenden Öffnungen (13, 13') festlegt,

einer zylindrischen Ventilkammer (15), die drehbar in dem Behälter (6, 48) befestigt ist und die einen Hohlraum (18) zwischen einem Paar von Endplatten (16, 16') umschließt sowie ein Paar von gegenüberliegenden, aus der Mitte versetzten Mündungen (20, 20') besitzt, die in und außer teilweise und vollständige Deckung mit den entsprechenden zugeordneten Öffnungen (13, 13') bewegbar sind, wobei die Mündungen (20, 20') entsprechende annähernd kreisförmige Öffnungen (21, 21') bilden,

einem Ventilstößel (8) zum einstellbaren Drehen der Ventilkammer (15) zur Steuerung des Durchflusses durch die Öffnungen (13, 13'), und

eine Druckmindervorrichtung (30), die im Hohlraum (18) angeordnet ist und den Fluidstrom durch den Hohlraum hindurch in eine Vielzahl von gekrümmten Strömen für eine beliebige einstellbare Winkelposition der Ventilkammer (15) unterteilt, dadurch gekennzeichnet, daß

die gegenüberliegenden Mündungen (20, 20') in den Endplatten (16, 16') so angeordnet sind, daß sie axial einander gegenüberliegen,

ein aus der Mitte versetztes Rohr (26) sich zwischen den Öffnungen (21, 21') innerhalb des Hohlraumes erstreckt, mindestens eine der Mündungen (20) einen länglichen, gekrümmten Kanal (22) bildet, der sich in der Breite von der Öffnung (21, 21') weg verlaufend verjüngt und einen Teil der Mündung (20) bildet,

die Ventilkammer (15) einen Fluiddurchfluß mit voller Bohrung durch nur dieses Rohr (26) ermöglicht, wenn die Öffnungen (21, 21') in volle Deckung mit den Öffnungen (13, 13') gebracht sind, und

der zumindest eine gekrümmte Kanal (22) so geformt ist, daß er eine gewünschte Druckreduzierung zwischen den Öffnungen (13, 13') für jede eingestellte Winkelposition der Ventilkammer (15) ergibt, bei der der mindestens eine gekrümmte Kanal (22) in Teildeckung oder in voller Deckung mit der zugeordneten Öffnung (13, 13') steht.

2. Ventil nach Anspruch 1, bei dem die Ventilkammer (15) auf dem Stößel (8) und drehbar mit diesem befestigt ist.

3. Ventil nach Anspruch 1 oder 2, bei dem das Rohr (26) im wesentlichen parallel zum Stößel (8) angeordnet ist.

4. Ventil nach einem der Ansprüche 1 bis 3, beim dem mindestens eine der Mündungsplatten einen Ventilsitz (25) aufweist, der in der Lage ist, die zugeordnete Öffnung abzuschließen.

5. Ventil nach einem der Ansprüche 1 bis 4, bei dem die Druckmindervorrichtung (30) eine Vielzahl von übereinander gestapelten, in axialer Richtung versetzten, scheibenförmigen Bauteilen (31a-31c) aufweist, die entsprechende durchgehende Löcher (32a-32c) besitzen.

6. Ventil nach Anspruch 5, bei dem jedes scheibenförmige Bauteil eine Bohrung (33) aufweist, und bei dem das Rohr (26) sich durch alle Bohrungen (33) in den scheibenförmigen Bauteilen (31a-31c) erstreckt.

7. Ventil nach einem der Ansprüche 1 bis 6, bei dem das, Gehäuse (47) zwei im wesentlichen halbzylindrische Gehäuseteile (47a, 47b) besitzt, die so ausgebildet sind, daß sie die Ventilkammer (15) und die Welle (8) umschließen, wodurch das Einsetzen bzw. Entfernen von unterschiedlichen Ventilkammern (15) in das bzw. aus dem Gehäuse (47) durch Lösen der Gehäuseteile (47a, 47b) ermöglicht wird.

8. Ventil nach einem der Ansprüche 1 bis 7, bei dem die Ventilkammer (15) einen Winkeldrosselbereich zwischen 180° und 280° besitzt.

9. Ventil nach einem der Ansprüche 1 bis 8, bei dem eine Antriebswelle (38) mit dem Stößel (8) zum Drehen der Kammer (15) gekoppelt ist, wodurch der Ausgangsdruck aus dem Ventil geregelt wird.

**Revendications**

1. Vanne de commande rotative (1, 46) comprenant:

un carter (2, 47) possédant un axe central (7) et entourant un logement (6, 48) qui définit un couple d'accès axialement opposés (13, 13');

une chambre cylindrique (15) de la vanne, montée rotative dans ledit logement (6, 48), ladite chambre (15) de la vanne enserrant une cavité (18) située entre un couple de plaques d'extrémité (16, 16') et possédant un couple d'orifices opposés décalés (20, 20'), qui peuvent être amenés en et hors d'un alignement partiel ou complet avec leurs axes respectifs associés (13, 13'), lesdits orifices (20, 20') délimitant des ouvertures respectives presque circulaires (21, 21');

une tige (8) de la vanne permettant de faire tourner, d'une manière réglable, ladite chambre (15) de la vanne pour commander le débit traversant lesdits accès (13, 13'); et

un milieu (30) de réduction de la pression, disposé dans ladite cavité (18) pour subdiviser l'écoulement de fluide traversant cette dernière en une pluralité d'écoulements tortueux pour toute position angulaire réglable de ladite chambre (15) de la vanne;

caractérisée en ce que lesdits orifices opposés (20, 20') sont situés dans lesdites plaques d'extrémité (16, 16') de manière à être disposés axialement en vis-à-vis l'un de l'autre;

qu'un tube excentré (26) s'étend entre lesdites ouvertures (21, 21') à l'intérieur de ladite cavité;

qu'au moins l'un desdits orifices (20) forme un conduit courbe allongé (22), dont la largeur diminue à partir de l'ouverture (21, 21') qui fait partie de l'orifice (20);

que ladite chambre (15) de la vanne permet au fluide circulant dans la totalité du passage de traverser uniquement ledit tube (26) lorsque lesdites ouvertures (21, 21') sont amenées dans une position d'alignement complet avec lesdits accès (13, 13'); et

que ledit au moins un conduit courbe (22) est conformé de manière à réaliser une réduction désirée de la pression entre lesdits accès (13, 13') pour chaque position angulaire réglée de ladite chambre (15) de la vanne, pour laquelle ledit au moins un conduit courbe (22) est aligné partiellement ou complètement avec l'accès (13, 13') qui lui est associé.

2. Vanne selon la revendication 1, dans laquelle ladite chambre (15) de la vanne est montée sur ladite tige (8) de manière à tourner conjointement avec cette dernière.

3. Vanne selon la revendication 1 ou 2, dans laquelle ledit tube (26) est sensiblement parallèle à ladite tige (8).

4. Vanne selon l'une quelconque des revendications 1 à 3, dans laquelle au moins l'une desdites plaques à orifices possède un siège de vanne (25) apte à fermer l'accès qui lui est associé.

5. Vanne selon l'une quelconque des revendications 1 à 4, dans laquelle ledit milieu (30) de réduction de la pression inclut une pluralité d'éléments en forme de disques empilés (31a-31c), espacés axialement et possédant des trous traversants respectifs (32a-32c).

6. Vanne selon la revendication 5, dans laquelle chaque élément en forme de disque possède un perçage (33), et ledit tube (26) traverse tous les perçages (33) ménagés dans lesdits éléments en forme de disques (31a-31c).

7. Vanne selon l'une quelconque des revendications 1 à 10, dans laquelle ledit carter (47) possède deux éléments sensiblement semi-cylindriques (47a, 47b), aptes à entourer ladite chambre (15) de la vanne et ledit arbre (8), ce qui permet l'insertion dans ledit carter (47) de différentes chambres (15) de la vanne, dans ledit carter (47) et leur retrait à partir de ce dernier moyennant le détachement desdits éléments (47a, 47b) du carter.

8. Vanne selon l'une quelconque des revendications 1 à 7, dans laquelle ladite chambre (15) de la vanne possède une gamme d'étranglement angulaire comprise entre 180° et 280°.

9. Vanne selon l'une quelconque des revendications 1 à 8, dans laquelle un arbre d'entraînement (38) est accouplé à ladite tige (8) de manière à faire tourner ladite chambre (15) afin de commander la pression de sortie délivrée par ladite vanne.

FIG. 7

FIG. 8

FIG. 1

FIG. 2

FIG. 3

2

FIG. 4

FIG. 6

FIG. 5

FIG. 9

FIG. 10

FIG. 11

FIG. 12

FIG. 13

FIG. 14

FIG. 15

FIG. 16